# EUROPEAN PATENT APPLICATION

(11) **EP 4 550 915 A1**
(43) Date of publication of application: **07.05.2025**
(21) Application number: 23842084.8
(22) Date of filing: 30.06.2023
(51) Int. Cl.: H04W 72/12

(54) **COMMUNICATION METHOD AND APPARATUS**

(30) Priority: 22.07.2022 CN 202210869475
(71) Applicant: Huawei Technologies Co., Ltd., Shenzhen, Guangdong 518129 (CN)
(72) Inventor: LU, Shaozhong, Shenzhen, Guangdong 518129 (CN); GUO, Zhiheng, Shenzhen, Guangdong 518129 (CN); HAN, Chengcheng, Shenzhen, Guangdong 518129 (CN)
(74) Representative: Pfenning, Meinig & Partner mbB
(86) International application number: PCT/CN2023/104572
(87) International publication number: WO 2024/017019

(57) **Abstract**

**In** a communication method, a terminal device receives first indication information and second indication information. The first indication information indicates a first symbol set on which the terminal device receives a plurality of synchronization signals. The second indication information indicates a second symbol set on which the terminal device sends an uplink signal. The first symbol set and the second symbol set have M overlapping symbols. The terminal device receives the synchronization signal or sends the uplink signal on the M overlapping symbols depending on whether the M overlapping symbols are in a first time period.

## Description

### TECHNICAL FIELD

Embodiments of this application relate to the field of wireless communication, and in particular, to a method and an apparatus for receiving and sending a synchronization signal, or in particular, to a method and an apparatus for receiving and sending an uplink signal.

### BACKGROUND

In a communication system, a base station configures, by using a synchronization signal position burst (ssb-PositionsInBurst), a time domain resource on which a terminal receives a synchronization signal. In a half duplex scenario, the terminal can only send a signal or receive a signal at a same moment. When a time domain resource on which the terminal sends an uplink signal conflicts with a time domain resource on which the terminal receives the synchronization signal, the terminal cannot send the uplink signal on the conflicting time domain resource. Consequently, an uplink resource cannot be used, and uplink coverage performance is poor.

### SUMMARY

This application provides a communication method, to improve uplink coverage.

According to a first aspect, this application provides a communication method. The method may be performed by a terminal device, or may be performed by a component (for example, a chip or a circuit) of the terminal device. This is not limited herein. The method includes: The terminal receives first indication information, where the first indication information indicates a first symbol set on which the terminal receives a synchronization signal set, the synchronization signal set includes at least one synchronization signal, the at least one synchronization signal includes a first synchronization signal, and a first symbol subset in the first symbol set is used to receive the first synchronization signal. The terminal device receives second indication information, where the second indication information indicates a second symbol set on which the terminal device sends a first uplink signal, and the second symbol set and the first symbol subset have M overlapping symbols in time. The terminal device receives the synchronization signal on the M symbols or sends the first uplink signal on the M symbols depending on whether the M symbols are in a first time period.

In this manner, when a time domain resource of the synchronization signal overlaps a time domain resource of an uplink signal, the terminal may receive the synchronization signal or send the uplink signal depending on whether the M overlapping symbols are in the first time period. This avoids a case in which the terminal always receives the synchronization signal and cannot send the uplink signal when the time domain resource of the synchronization signal overlaps the time domain resource of the uplink signal, so that uplink coverage is improved.

In an optional manner, when the M symbols are in the first time period, the terminal device receives the first synchronization signal on the first symbol subset, and skips sending the first uplink signal on the second symbol set, where the first symbol subset includes the M symbols.

In an optional manner, when the M symbols are in the first time period, the terminal device receives the first synchronization signal on the first symbol subset, and sends the first uplink signal on a symbol in a second symbol subset other than the M symbols, where the first symbol subset includes the M symbols.

In an optional manner, when the M symbols are not in the first time period, the terminal device sends the first uplink signal on the second symbol set, and skips receiving the first synchronization signal on the first symbol subset, where the second symbol set includes the M symbols.

In an optional manner, when the M symbols are not in the first time period, the terminal device sends the first uplink signal on the second symbol set, and receives the first synchronization signal on a symbol in the first symbol subset other than the M symbols, where the second symbol set includes the M symbols.

In an optional manner, the first time period belongs to a first time period set.

In an optional manner, each time period in the first time period set does not overlap.

In an optional manner, each time period in the first time period set is discontinuous.

In an optional manner, the first time period includes synchronization signals in a part of beam directions. In this manner, compared with a manner in which an SMTC needs to include synchronization signals in all beam directions, duration of the first time period is more flexible. Therefore, the terminal receives the synchronization signal or sends the uplink signal more flexibly.

In an optional manner, the first time period is a proper symbol subset of the first symbol set. In this manner, the first time period may include only a part of time domain resources used to receive the synchronization signal set, rather than all the time domain resources, and compared with the manner in which the SMTC needs to include time domain resources of the synchronization signals in all the beam directions, the duration of the first time period is shorter. Therefore, the terminal receives the synchronization signal or sends the uplink signal more flexibly.

In an optional manner, the first time period set includes synchronization signals in a plurality of half-frames.

In an optional manner, the first time period set is determined based on at least one of the following parameters:
one or more lengths, where the one or more lengths are a length of one or more time periods in the first time period set;
one periodicity, where the periodicity is a periodicity of the first time period set; and
one or more offsets, where the one or more offsets indicate a start position of the one or more time periods in the first time period set in one periodicity.

In an optional manner, the first time period set is predefined.

In an optional manner, the first time period set is configured by a network device. The terminal device receives third indication information, where the third indication information indicates the first time period set.

In an optional manner, the third indication information indicates the first time period set by using a first periodicity, at least one length, and at least one offset. The first periodicity is a periodicity of the first time period set. The at least one length is the length of the one or more time periods in the first time period set. The at least one offset indicates the start position of the one or more time periods in the first time period set in the periodicity.

In an optional manner, the first time period set is determined by using a first bitmap, the first bitmap indicates N synchronization signals in the synchronization signal set, and the first time period set is a set of time domain symbols on which N synchronization signal sets are located.

In an optional manner, the first time period set belongs to a plurality of time period sets, and the plurality of time period sets are predefined, or the plurality of time period sets are indicated by using fourth indication information.

In this manner, the plurality of time period sets may be predefined or configured. The network device and the terminal device may select a more adaptive time period set based on a transmission requirement, so that communication flexibility is improved.

In an optional manner, the plurality of time period sets are determined based on at least one of the following parameters:
one or more lengths, where the one or more lengths are a length of one or more time periods in each first time period set;
one or more periodicities, where the one or more periodicities are periodicities of a plurality of first time period sets; and
one or more offsets, where the one or more offsets indicate a start position of the one or more time periods in each first time period set in one periodicity.

In an optional manner, the first uplink signal is carried on a physical uplink shared channel PUSCH, a physical uplink control channel PUCCH, or a physical random access channel PRACH, or the first uplink signal is a sounding reference signal SRS.

In an optional manner, the third indication information is carried in downlink control information DCI or a media access control control element MAC CE.

In an optional manner, the fourth indication information is carried in radio resource control RRC signaling.

According to a second aspect, this application provides a communication method. The method may be performed by a network device, or may be performed by a component (for example, a chip or a circuit) of the network device. This is not limited herein. The method includes: The network device sends first indication information, where the first indication information indicates a first symbol set on which a terminal device receives a synchronization signal set, the synchronization signal set includes at least one synchronization signal, the at least one synchronization signal includes a first synchronization signal, and a first symbol subset in the first symbol set is used to receive the first synchronization signal. The network device sends second indication information, where the second indication information indicates a second symbol set on which the terminal device sends a first uplink signal, and the second symbol set and the first symbol subset have M overlapping symbols in time. The network device sends the synchronization signal on the M symbols or receives the first uplink signal on the M symbols depending on whether the M symbols are in a first time period.

In an optional manner, when the M symbols are in the first time period, the network device sends the first synchronization signal on the first symbol subset, and skips receiving the first uplink signal on the second symbol set, where the first symbol subset includes the M symbols.

In an optional manner, when the M symbols are in the first time period, the network device sends the first synchronization signal on the first symbol subset, and receives the first uplink signal on a symbol in a second symbol subset other than the M symbols, where the first symbol subset includes the M symbols.

In an optional manner, when the M symbols are not in the first time period, the network device sends the first synchronization signal on the first symbol subset, and receives the first uplink signal on the second symbol set, where the second symbol set includes the M symbols.

In an optional manner, the first time period belongs to a first time period set.

In an optional manner, the first time period is a proper symbol subset of the first symbol set.

In an optional manner, each time period in the first time period set does not overlap.

In an optional manner, each time period in the first time period set is discontinuous.

In an optional manner, the first time period includes synchronization signals in a part of beam directions. In an optional manner, the first time period set includes synchronization signals in a plurality of half-frames.

In an optional manner, the first time period set is predefined.

In an optional manner, the first time period set is determined based on at least one of the following parameters:
one or more lengths, where the one or more lengths are a length of one or more time periods in the first time period set;
one periodicity, where the periodicity is a periodicity of the first time period set; and
one or more offsets, where the one or more offsets indicate a start position of the one or more time periods in the first time period set in one periodicity.

In an optional manner, the first time period set is configured by the network device. The network device sends third indication information, where the third indication information indicates the first time period set.

In an optional manner, the third indication information indicates the first time period set by using a first periodicity, at least one length, and at least one offset. The first periodicity is the periodicity of the first time period set. The at least one length is the length of the one or more time periods in the first time period set. The at least one offset indicates the start position of the one or more time periods in the first time period set in the periodicity.

In an optional manner, the first time period set is determined by using a first bitmap, the network device sends the first bitmap, the first bitmap indicates N synchronization signals in the synchronization signal set, and the first time period set is a set of time domain symbols on which N synchronization signal sets are located.

In an optional manner, the first time period set belongs to a plurality of time period sets, and the plurality of time period sets are predefined.

In an optional manner, the plurality of time period sets are indicated by using fourth indication information. The network device sends the fourth indication information.

In an optional manner, the fourth indication information indicates at least one of the following parameters:
one or more lengths, where the one or more lengths are the length of the one or more time periods in the first time period set;
one or more periodicities, where the one or more periodicities are the periodicity of the first time period set; and
one or more offsets, where the one or more offsets indicate the start position of the one or more time periods in the first time period set in one periodicity.

In an optional manner, the first uplink signal is carried on a physical uplink shared channel PUSCH, a physical uplink control channel PUCCH, or a physical random access channel PRACH, or the first uplink signal is a sounding reference signal SRS.

In an optional manner, the third indication information is carried in downlink control information DCI or a media access control control element MAC CE.

In an optional manner, the fourth indication information is carried in radio resource control RRC signaling.

For beneficial effects of any one of the manners of the second aspect, refer to the descriptions in the first aspect. Details are not described herein again.

According to a third aspect, a communication apparatus is provided. The communication apparatus may be the terminal device in method embodiments provided in the first aspect, or a chip applied to the terminal device. The communication apparatus includes a processor and an interface circuit. The interface circuit is configured to receive a signal from another communication apparatus other than the communication apparatus and transmit the signal to the processor, or send a signal from the processor to another communication apparatus other than the communication apparatus. The processor enables, through a logic circuit or executing code instructions, the communication apparatus to perform the method performed by the terminal device in the foregoing method embodiments.

According to a fourth aspect, this application provides a communication apparatus. The communication apparatus may be the network device in method embodiments provided in the second aspect, or may be a chip applied to the network device. The communication apparatus includes a processor and an interface circuit. The interface circuit is configured to receive a signal from another communication apparatus other than the communication apparatus and transmit the signal to the processor, or send a signal from the processor to another communication apparatus other than the communication apparatus. The processor enables, through a logic circuit or executing code instructions, the communication apparatus to perform the method performed by the network device in the foregoing method embodiments.

According to a fifth aspect, this application provides a computer-readable storage medium. The computer-readable storage medium stores instructions, and when the instructions are executed by a communication apparatus, the method performed by the terminal device in the first aspect is performed.

According to a sixth aspect, this application provides a computer-readable storage medium. The computer-readable storage medium stores instructions, and when the instructions are executed by a communication apparatus, the method performed by the network device in the second aspect is performed.

According to a seventh aspect, this application provides a computer program product. The computer program product includes a computer program, and when the computer program is run, the method performed by the terminal device according to the first aspect is performed.

According to an eighth aspect, this application provides a computer program product. The computer program product includes a computer program, and when the computer program is run, the method performed by the network device according to the second aspect is performed.

According to a ninth aspect, this application provides a chip system. The chip system includes a processor, configured to implement a function of the terminal device in the method in the first aspect. In a possible design, the chip system further includes a memory, configured to store program instructions and/or data. The chip system may include a chip, or may include a chip and another discrete component.

According to a tenth aspect, this application provides a chip system. The chip system includes a processor, configured to implement a function of the network device in the method in the first aspect. In a possible design, the chip system further includes a memory, configured to store program instructions and/or data. The chip system may include a chip, or may include a chip and another discrete component.

According to an eleventh aspect, this application provides a communication system, including at least one communication apparatus according to the third aspect and at least one communication apparatus according to the fourth aspect.

### BRIEF DESCRIPTION OF DRAWINGS

FIG. 1 is a diagram of an architecture of a mobile communication system to which an embodiment of this application is applied;
FIG. 2 is a diagram of a time unit relationship according to this application;
FIG. 3 is a diagram of a synchronization signal in time domain and frequency domain according to this application;
FIG. 4 is a diagram of a communication method according to this application;
FIG. 5 shows an example of a first time period according to this application;
FIG. 6 shows an example of a first time period according to this application;
FIG. 7 shows an example of a first time period set according to this application;
FIG. 8 shows an example of a first time period set according to this application;
FIG. 9 shows an example of a first time period set according to this application;
FIG. 10 shows an example of a first time period set according to this application;
FIG. 11 is a diagram of a structure of a possible communication apparatus according to this application; and
FIG. 12 is a diagram of a structure of a possible communication apparatus according to this application.

### DESCRIPTION OF EMBODIMENTS

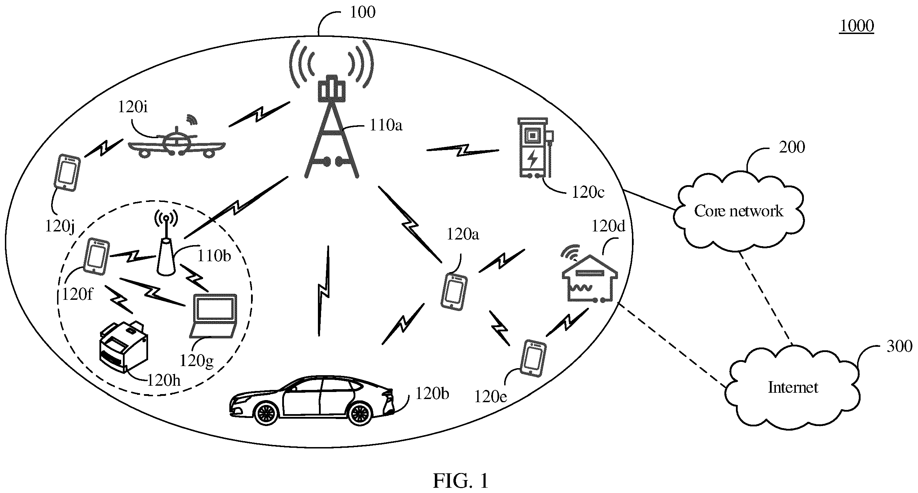

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or a part of functions of the core network device and a part of functions of the radio access network device are integrated into one physical device. Terminals may be connected to each other in a wired or wireless manner and radio access network devices may be connected to each other in a wired or wireless manner. The access network device may be referred to as a network device for short. FIG. 1 is merely a diagram. The communication system may further include another network device, for example, may further include a wireless relay device and a wireless backhaul device, which are not shown in FIG. 1.

The radio access network device, or the network device, may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like, or may be a module or unit that implements a part of functions of the base station, for example, may be a central unit (central unit, CU) or a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU implements functions of a radio link control layer and a media access control (media access control, MAC) layer of the base station, and may further implement a part or all of functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form used by the radio access network device are not limited in embodiments of this application. For ease of description, the following provides descriptions by using an example in which the radio access network device is the base station.

The terminal may also be referred to as a terminal device (terminal device), user equipment (user equipment, UE), a mobile station, a mobile terminal, or the like. The terminal may be a mobile phone, a tablet computer, a computer having a wireless transceiver function, a wearable device, a vehicle, an uncrewed aerial vehicle, a helicopter, aircraft, a ship, a robot, a robotic arm, a smart home device, a wireless modem (modem), a computing device, another processing device connected to a wireless modem, an augmented reality (augmented reality, AR) device, a virtual reality (virtual reality, VR) device, an artificial intelligence (artificial intelligence, AI) device, or the like. The terminal may further include a subscriber unit (subscriber unit), a cellular phone (cellular phone), a smartphone (smartphone), a wireless data card, a personal digital assistant (personal digital assistant, PDA) computer, a tablet computer, a netbook computer, a handheld (handheld) device, a laptop computer (laptop computer), a cordless telephone (cordless phone), a wireless local loop (wireless local loop, WLL) station, a machine type communication (machine type communication, MTC) terminal, relay user equipment, or the like. The relay user equipment may be, for example, a residential gateway (residential gateway, RG). For ease of description, in this application, the devices mentioned above are collectively referred to as terminals.

The terminal may be widely used in various scenarios, for example, device-to-device (device-to-device, D2D), vehicle to everything (vehicle to everything, V2X) communication, machine type communication (machine type communication, MTC), an internet of things (internet of things, IOT), virtual reality, augmented reality, industrial control, autonomous driving, telemedicine, a smart grid, smart furniture, a smart office, a smart wearable, smart transportation, and a smart city.

A specific technology and a specific device form used by the terminal are not limited in embodiments of this application.

The base station and the terminal may be fixed or movable. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed according to a radio air interface protocol. Certainly, the communication between 110a and 120i may alternatively be performed according to on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a function of the base station, and 120a to 120j in FIG. 1 may be referred to as communication apparatuses having a function of the terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios such as a smart grid, industrial control, smart transportation, and a smart city. The function of the terminal may also be performed by a module (for example, a chip or a modem) in the terminal, or may be performed by an apparatus including the function of the terminal.

In this application, the base station sends a downlink signal or downlink information to the terminal. The downlink information is carried on a downlink channel. The terminal sends an uplink signal or uplink information to the base station. The uplink information is carried on an uplink channel.

The following explains and describes some nouns or terms in this application.

### (1) Symbol

The symbol may also be referred to as a time domain symbol. The symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, the symbol in embodiments of this application is the time domain symbol. In an NR system, the symbol may be understood as a minimum time unit. Therefore, the symbol in this application may also be understood as a minimum time unit in a communication system. It should be understood that, the symbol is only a name of the minimum time unit. After the communication system is changed, the symbol in this application may also be replaced with a name corresponding to a minimum time unit in a changed communication system. The changed communication system may be a communication system before NR, or may be a communication system evolved based on NR, or may be a communication system different from NR.

### (2) Time unit

The time unit is a time domain unit for signal transmission. Because the symbol may be understood as the minimum time unit, a time unit includes at least one symbol.

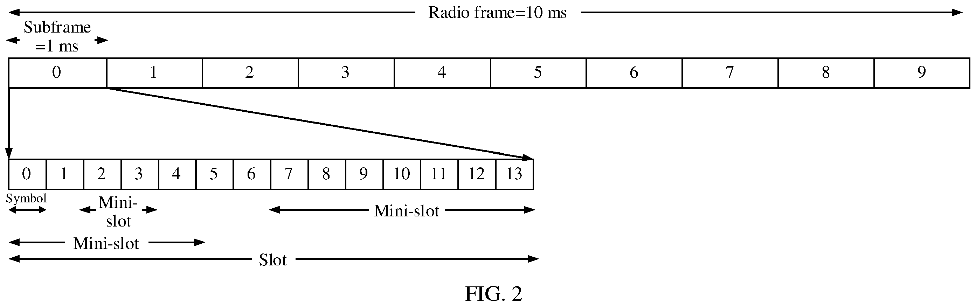

For example, one time unit may be one radio frame (radio frame), one subframe (subframe), one slot (slot), one mini-slot (mini-slot), or one symbol. FIG. 2 is a diagram of a possible time unit relationship according to this application. Refer to FIG. 2. A time domain length of one radio frame is 10 ms. One radio frame may include 10 subframes, and a time domain length of one subframe is 1 ms. One subframe may include one or more slots. Specifically, a quantity of slots included in one subframe is related to a subcarrier spacing (Subcarrier Spacing, SCS). When the SCS is 15 kHz, a time domain length of one slot is 1 ms. One slot includes 14 symbols.

### (3) Synchronization signal block (synchronization signal block, SSB)

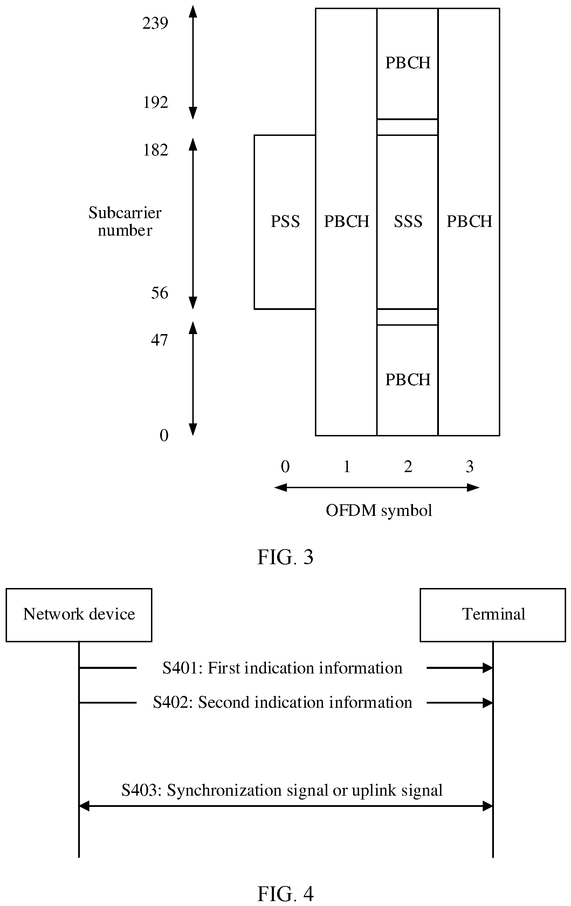

The SSB may include two parts, namely, a synchronization signal (synchronization signal, SS) and a physical broadcast channel (physical broadcast channel, PBCH) respectively. The SS may include a primary synchronization signal (primary synchronization signal, PSS) and a secondary synchronization signal (secondary synchronization signal, SSS). Therefore, it may also be considered that, the SSB includes three parts, that is, the SSB includes the PSS, the SSS, and the PBCH. FIG. 3 is a diagram of an SSB in time domain and frequency domain.

In FIG. 3, the SSB may occupy four consecutive symbols in time domain, and may occupy 20 resource blocks (resource blocks, RBs), namely, 240 subcarriers (subcarriers, SCs) in frequency domain.

The SSB mainly includes two functions, namely, (1) a function of cell synchronization and obtaining a master information block (master information block, MIB) by a terminal device; and (2) a function of beam training on a network device side.

### (4) Half duplex (Half duplex, HD)

The half duplex is a communication standard (radio access technology, RAT), and means that a communication device cannot receive and transmit a signal simultaneously. In other words, at a same moment, a half duplex communication device can support only signal sending or signal receiving. The half duplex corresponds to full duplex. The full duplex means that the communication device can support both the signal sending or the signal receiving at the same moment.

For a half duplex terminal, one terminal may support only a half duplex communication mode, or one terminal may support a half duplex communication mode or a full duplex communication mode. However, the terminal works in the half duplex mode.

### (5) Time division duplex (Time division duplex, TDD) system

In the TDD system, time domain resources are classified into uplink and downlink resources, and sent and received signals are separated in a time separation manner. In the TDD system, the uplink and downlink signals are transmitted on different time domain resources. Generally, the uplink and downlink signals in the TDD system share a same frequency.

### (6) Subband non-overlapping full duplex (Subband non-overlapping full duplex, SBFD)

In the TDD system, the time domain resources are classified into the uplink and downlink resources. Therefore, allocation of an uplink time domain resource is limited. Consequently, uplink coverage is reduced, and a delay is increased. In a possible enhanced manner, sending or receiving of a downlink signal at a same moment is allowed on an uplink time domain resource of the TDD, and sending or receiving of an uplink signal at a same moment is allowed on a downlink time domain resource, that is, the full duplex (Full duplex, FD). However, uplink and downlink transmission at a same moment on a same time-frequency resource may cause strong cross link interference (Cross link interference, CLI). To avoid the CLI, the subband non-overlapping full duplex (Subband non-overlapping full duplex, SBFD) is proposed. The SBFD is to divide a frequency band into an uplink subband and a downlink subband. The uplink subband is used to send or receive the uplink signal, and the downlink subband is used to send or receive the downlink signal. Compared with the TDD, the SBFD includes more uplink resources to improve uplink coverage performance.

A half duplex-subband non-overlapping full duplex (Half duplex-Subband non-overlapping full duplex, HD-SBFD) terminal may be a terminal device that supports only an HD-SBFD communication mode, or may be a terminal device that supports a plurality of communication modes. However, the terminal device works in the HD-SBFD mode.

### (7) SSB measurement

The base station sends different SSBs on different beams in a beam scanning manner. Specifically, the base station sends, at a plurality of moments in a time division multiplexing manner, SSBs in all directions that are required for covering an entire cell. An SSB set included in a beam sweeping periodicity is referred to as a synchronization signal burst set (SS burst set). One synchronization signal burst set includes a group of SSBs in all beam directions. In a current communication system, the synchronization signal burst set supports periodicities of 5 ms, 10 ms, 20 ms, 40 ms, 80 ms, and 160 ms. Each synchronization signal burst set is always in a half-frame. For example, each synchronization signal burst set may be in a first half-frame of a system frame, or may be in a second half-frame of a system frame. In frequency domain, a same frequency domain position is configured for an SSB beam in each cell. In time domain, the base station indicates, by using a synchronization signal block position burst (ssb-PositionsInBurst), a time domain resource on which the terminal device receives the SSB. To ensure that all SSB beams in each cell are completely measured, when delivering an SSB measurement configuration, the base station needs to indicate an SSB measurement frequency, and further needs to indicate a time window for the terminal device to search for the SSB.

### (8) SSB measurement timing configuration (SSB measurement timing configuration, SMTC)

When delivering the SSB measurement configuration, in addition to indicating a measurement frequency of the SSB, the base station further needs to indicate, by using the SMTC, a time domain position and measurement duration for starting SSB measurement in one cell. In other words, the SMTC indicates a time sequence configuration for the terminal to perform SSB measurement in the cell, or is understood as a time window for the terminal to perform SSB measurement. There may be a plurality of SMTC configurations, and the SMTC configuration may include an SMTC periodicity, SMTC duration, and an SMTC offset.

For the half-duplex terminal, the current SSB measurement includes the following problems.
(1) For a synchronization signal outside the SMTC, the terminal does not receive the synchronization signal outside the SMTC. Further, when a time domain resource of the synchronization signal outside the SMTC conflicts with a time domain resource of uplink transmission, for the half duplex terminal, the half duplex terminal does not receive the synchronization signal on the time domain resource of the synchronization signal outside the SMTC, and cannot send the uplink signal. Consequently, flexibility of the uplink transmission is poor, and a resource waste is also caused.
(2) Each synchronization signal burst set needs to be centralized in one half-frame. To measure SSBs in all directions in each cell, the SMTC needs to cover the half-frame. The terminal performs SSB measurement on a time domain resource indicated by the ssb-PositionsInBurst in the SMTC. However, the uplink transmission cannot be sent on an entire time domain resource of the SMTC. Consequently, uplink coverage of the terminal is poor, and a feedback delay is large.

Therefore, this application provides a communication method, to reduce the feedback delay of the terminal, enhance the flexibility of the uplink transmission, and improve the uplink coverage performance. Based on the network architecture provided in FIG. 1, the following describes in detail a communication method in this application with reference to FIG. 4.

S401: A network device sends first indication information, and correspondingly, a terminal receives the first indication information.

Specifically, the first indication information indicates a first symbol set on which the terminal receives a synchronization signal set. The synchronization signal set includes one or more synchronization signals. In an optional manner, the first indication information is a bitmap, that is, the first indication information indicates the synchronization signal set in a bitmap manner. For example, if the first indication information includes K bits, and the bits indicate K synchronization signals one by one, the K synchronization signals form the synchronization signal set. For another example, the synchronization signal set includes K synchronization signals. The first indication information includes H bits, where H is greater than or equal to K. K bits that are set to 1 in the H bits are in one-to-one correspondence with the K synchronization signals included in the synchronization signal set. For example, the K bits that are set to 1 in the H bits are in one-to-one correspondence with the K synchronization signals included in the synchronization signal set in a time sequence, K is 10, H is 15, and the first indication information is 111101001100110.

Optionally, the synchronization signals in the synchronization signal set include synchronization signals in all beam directions. The synchronization signals in all the beam directions may be understood as SSBs in all the directions that are required to cover an entire cell.

Optionally, a time domain resource of one or more synchronization signals in the synchronization signal set is located in a half-frame.

Optionally, the synchronization signal set is a synchronization signal burst set.

S402: The network device sends second indication information, and correspondingly, the terminal receives the second indication information.

Specifically, the second indication information indicates a second symbol set on which the terminal sends a first uplink signal. In the synchronization signal set, there is at least one synchronization signal whose time domain resource overlaps that on which the first uplink signal is sent. For example, a time domain resource of the first synchronization signal in the synchronization signal set overlaps that on which the first uplink signal is sent. The one or more synchronization signals in the synchronization signal set include the first synchronization signal. A first symbol subset in the first symbol set is used to receive the first synchronization signal. In other words, the first symbol subset in the first symbol set is configured to receive the first synchronization signal. The first symbol subset and the second symbol set have M overlapping symbols. The M overlapping symbols may be a universal set of the first symbol subset, or may be a proper subset of the first symbol subset. Correspondingly, the M overlapping symbols may be a universal set of the second symbol set, or may be a proper subset of the second symbol set.

It should be understood that, S401 and S402 may correspond to two times of sending of the network device. Steps S401 and S402 may alternatively correspond to one time of sending of the network device. This is not limited in this application.

S403: The terminal receives the synchronization signal on the M symbols or sends the first uplink signal on the M symbols depending on whether the M symbols are in a first time period.

In an optional manner, the terminal is a half duplex terminal. Alternatively, the terminal operates in a half duplex mode.

Further optionally, the terminal is an HD-SBFD terminal.

Specifically, there may be the following several cases in which the terminal performs sending and receiving on the M symbols.

Case 1: When the M symbols are in the first time period, the terminal receives the first synchronization signal on the M symbols. Because the first symbol subset includes the M symbols, in the case 1, that the terminal receives the synchronization signal on the M symbols may alternatively be described as that the terminal receives the first synchronization signal on the first symbol subset, and skips sending the first uplink signal on the second symbol set. In the case 1, when a time domain resource on which the terminal receives the synchronization signal conflicts with a time domain resource on which the terminal sends the uplink signal, the terminal receives the synchronization signal, and skips sending the uplink signal.

In an optional manner, the first uplink signal is carried on a physical uplink shared channel (physical uplink shared channel, PUSCH), a physical uplink control channel (physical uplink control channel, PUCCH), or a physical random access channel (physical random access channel, PRACH).

Case 2: When the M symbols are in the first time period, the terminal receives the first synchronization signal on the M symbols, and sends the first uplink signal on a time domain resource other than the M symbols in the second symbol set. Because the first symbol subset includes the M symbols, in the case 2, that the terminal receives the first synchronization signal on the M symbols may alternatively be described as that the terminal receives the first synchronization signal on the first symbol subset. In the case 2, when a time domain resource on which the terminal receives the synchronization signal conflicts with a time domain resource on which the terminal sends the uplink signal, the terminal device receives the synchronization signal on the conflicting time domain resource, and sends the uplink signal on a time domain resource, in the time domain resource of the uplink signal, other than a time domain resource that overlaps the time domain resource of the synchronization signal.

In an optional manner, the first uplink signal is an SRS.

Case 3: When the M symbols are not in the first time period, the terminal sends the first uplink signal on the M symbols. Because the second symbol set includes the M symbols, in the case 3, that the terminal sends the first uplink signal on the M symbols may alternatively be described as that the terminal sends the first uplink signal on the second symbol set, and skips receiving the first synchronization signal on the first symbol subset. In the case 3, when a time domain resource on which the terminal receives the synchronization signal conflicts with a time domain resource on which the terminal sends the uplink signal, the terminal sends the first uplink signal, and skips receiving the synchronization signal.

In an optional manner, the first uplink signal is carried on a PUSCH, a PUCCH, or a PRACH, or the first uplink signal is an SRS.

Case 4: When the M symbols are not in the first time period, the terminal sends the first uplink signal on the M symbols, and receives the first synchronization signal on a time domain resource other than the M symbols in the first symbol subset. Because the second symbol set includes the M symbols, in the case 4, that the terminal sends the first signal on the M symbols may alternatively be described as that the terminal sends the first uplink signal on the second symbol set.

In S403, whether the M symbols are in first time is related to whether the terminal receives the synchronization signal or sends the uplink signal on a conflicting resource. Therefore, the case 1 to the case 4 in S403 may alternatively be replaced with the following interpretation manners. Detailed descriptions are as follows.

Case 1: When the M symbols are in the first time period, a priority of the synchronization signal is higher than a priority of the first uplink signal. The terminal receives the first synchronization signal on the first symbol subset, and skips sending the first uplink signal on the second symbol set.

Case 2: When the M symbols are in the first time period, a priority of the synchronization signal is higher than a priority of the first uplink signal. The terminal receives the first synchronization signal on the first symbol subset, and sends the first uplink signal on a time domain resource other than the M symbols in the second symbol set.

Case 3: When the M symbols are not in the first time period, a priority of the first uplink signal is higher than a priority of the synchronization signal. The terminal sends the first uplink signal on the second symbol set, and skips receiving the first synchronization signal on the first symbol subset.

Case 4: When the M symbols are not in the first time period, a priority of the first uplink signal is higher than a priority of the synchronization signal. The terminal sends the first uplink signal on the second symbol set, and receives the first synchronization signal on a time domain resource other than the M symbols in the first symbol subset.

The following further describes the first time period.

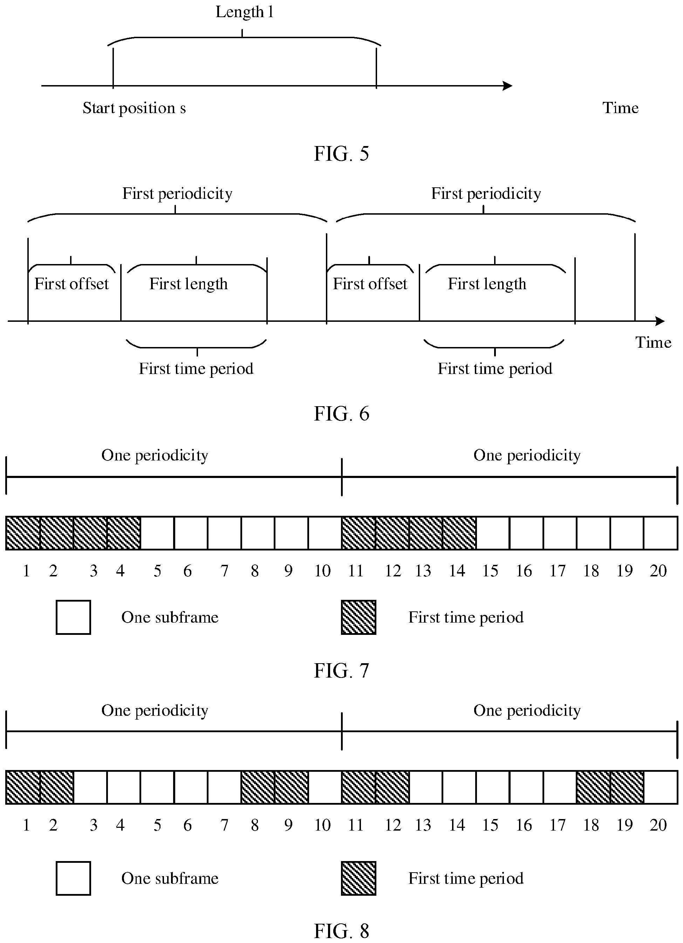

The first time period may be predefined, or may be indicated by the network device by using signaling. In an optional manner, the network device indicates a start position and duration of the first time period by using signaling, and the terminal device determines the first time period based on the start position and the duration. FIG. 5 shows an example of a first time period. In FIG. 5, the first time period is determined based on a start position s and duration 1. FIG. 6 shows another example of a first time period. In FIG. 6, the first time period is determined based on a first periodicity, a first offset, and a first length. The first length is a length of the first time period. The first offset is a difference between a start position of the first time period and a start position of the first periodicity.

In an optional manner, the first time period is a proper symbol subset of a first symbol set. Alternatively, the first time period includes synchronization signals in a part of beam directions.

The first time period is the proper symbol subset of the first symbol set. Alternatively, this is understood as that, the first time period includes a part of time domain resources of all synchronization signals in a synchronization signal set. The first time period in this application may include only a part of time domain resources used to receive the synchronization signal set, rather than all the time domain resources. When the synchronization signal set is a synchronization signal burst set, that is, the first time period includes the synchronization signals in the part of the beam directions, in this manner, compared with a manner in which an SMTC needs to include synchronization signals in all the beam directions, duration of the first time period is shorter. Therefore, the terminal receives the synchronization signal or sends the uplink signal more flexibly.

In an optional manner, the first time period belongs to a first time period set, that is, the first time period is a time period in the first time period set. A time period in the first time period set is associated with whether the terminal preferentially receives the synchronization signal or preferentially sends the first uplink signal on the conflicting time domain resource. Therefore, the first time period set may also be understood as a priority pattern (pattern).

Optionally, each time period in the first time period set does not overlap.

Further optionally, each time period in the first time period set is discontinuous.

The first time period set may be predefined, or may be indicated by the network device by using signaling. When the first time period set is indicated by the network device by using the signaling, the method shown in FIG. 4 further includes step S403 1: The network device sends third indication information, and correspondingly, the terminal receives the third indication information. The third indication information indicates the first time period set.

Optionally, the first time period set may be determined in a plurality of manners.

Manner 1: The first time period set is determined by using at least one of the following parameters, or the first time period set is predefined by predefining at least one of the following parameters, or the first time period set is indicated by indicating at least one of the following parameters by using signaling.

The at least one parameter includes one or more parameters:
one periodicity T, where the periodicity is a periodicity of the first time period set;
one or more lengths L, where the one or more lengths are a length of one or more time periods in the first time period set; and
one or more offsets O, where the one or more offsets indicate a start position of the one or more time periods in the first time period set in one periodicity. In other words, the one or more offsets are a difference between the start position of the one or more time periods in the first time period set and a start position of a periodicity of the one or more time periods.

For example, in a unit of a subframe, a value of the periodicity T may be 5, 10, 20, 40, 80, 160, 320, 640, or 1280, a value L of the one or more lengths may include 1, 2, 3, 4, or 5, and a value F of the one or more offsets is 0, 1, ..., or L-1. The following provides some examples with reference to the accompanying drawings.

For example, a quantity of at least one length and a quantity of at least one offset are both 1. FIG. 7 shows an example of a first time period set. In FIG. 7, in a unit of a subframe, the first periodicity is 10, one length is 4, and one offset is 0.

For example, the at least one length is one length, and the at least one offset is a plurality of offsets, that is, lengths of a plurality of first time periods in the first periodicity are the same. FIG. 8 shows an example of a first time period set. In FIG. 8, in a unit of a subframe, one periodicity is 10, one length is 2, and two offsets are 0 and 7 respectively.

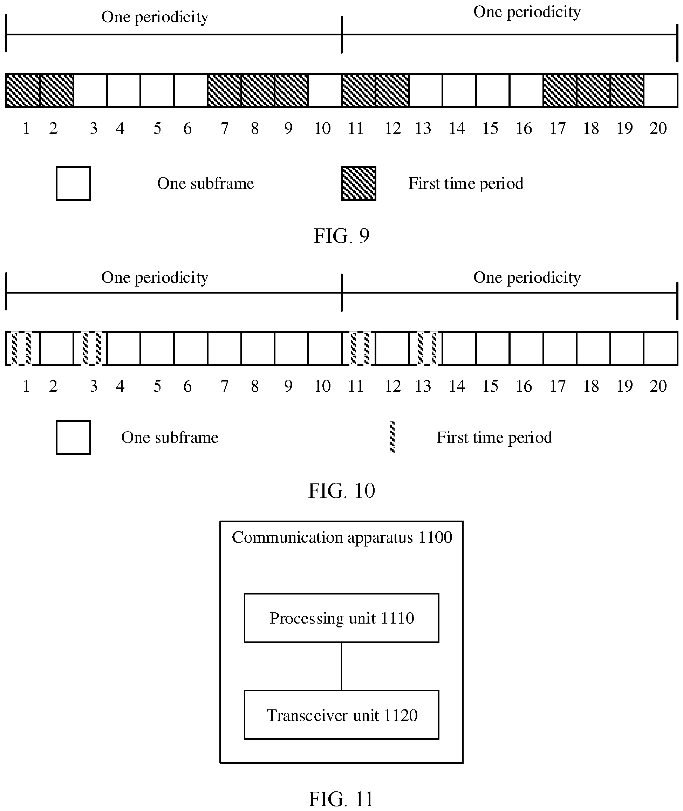

For example, both a quantity of at least one length and a quantity of at least one offset are M, where M is an integer greater than or equal to 2. The M lengths are in one-to-one correspondence with the M offsets. FIG. 9 shows an example of a first time period set. In FIG. 9, in a unit of a subframe, one periodicity is 10, M is 2, two time lengths are 2 and 3 respectively, and offsets corresponding to the two time lengths are 0 and 6 respectively.

Manner 2: The first time period set is determined by using a first bitmap, the first bitmap indicates N synchronization signals in the synchronization signal set, and the first time period set is a set of time domain symbols on which the N synchronization signals are located. Further optionally, a quantity of bits included in the first bitmap is the same as a quantity of synchronization signals in the synchronization signal set. For example, if the synchronization signal set includes K synchronization signals, the first bitmap includes K bits, and the K bits are in one-to-one correspondence with the K synchronization signals. Different values of each bit indicate whether a time domain resource of a corresponding synchronization signal belongs to the first time period set.

For example, the synchronization signal set includes 10 synchronization signals. Numbers are 1 to 10 respectively. The first bitmap includes 10 bits. When the first bitmap is 0110011001, the first bitmap indicates synchronization signals numbered 2, 3, 6, 7, and 10 from the 10 synchronization signals. In this case, the first time period set is a set of time domain symbols on which the synchronization signals numbered 2, 3, 6, 7, and 10 are located. When the first bitmap is 1001100110, the first bitmap indicates synchronization signals numbered 1, 4, 5, 7, and 8 from the 10 synchronization signals. In this case, the first time period set is a set of time domain symbols on which the synchronization signals numbered 1, 4, 5, 7, and 8 are located. In this manner, based on the first bitmap, the first time period set can be focused on a time domain symbol on which the synchronization signal is located, and uplink transmission can be performed on a time domain symbol outside the first time period set, so that a feedback delay is further reduced. In addition, the first time period set is focused on the time domain symbol on which the synchronization signal is located, and there are a large quantity of resources for uplink transmission, so that uplink coverage can be improved.

FIG. 10 shows an example of a first time period set. In FIG. 10, in a unit of a subframe, one periodicity is 10. Each of a subframe 1 to a subframe 4 includes time domain resources of two synchronization signals. Eight synchronization signals form a synchronization signal set. When the first bitmap is 11001100, resources of two synchronization signals in a first subframe in one periodicity and resources of two synchronization signals in a third subframe form a first time period set.

In an optional manner, the synchronization signal set is a synchronization signal in a synchronization signal-sending periodicity. In this manner, a base station periodically sends the synchronization signal. A sending periodicity of each synchronization signal includes synchronization signals in all beam directions.

Based on the foregoing descriptions, further optionally, the first time period set includes the synchronization signals in all the beam directions. In addition, the synchronization signals in all the beam directions included in a first time set may belong to different synchronization signal sending periodicities. In other words, the first time period set includes the synchronization signals in all the beam directions. However, the synchronization signals in all the beam directions do not need to belong to a same sending periodicity. In this manner, the terminal can measure the synchronization signals in all the beam directions on a time domain resource in the first time period set, and compared with a manner in which the terminal needs to measure the synchronization signals in all the beam directions on a continuous time domain resource, communication flexibility is higher. In an optional manner, the synchronization signals included in the first time period set are scattered in a plurality of half-frames. For example, in FIG. 8, the synchronization signals included in the first time period set are scattered in two half-frames.

In an SMTC configuration, an SMTC window needs to cover the synchronization signals in all the beam directions. Therefore, the SMTC covers a maximum of one half-frame, and the terminal cannot send the uplink signal in the SMTC window, and a feedback delay is large. In this application, the first time period set includes the synchronization signals in all the beam directions, so that the terminal can measure a communication status in each beam direction in a cell. The first time period may include only a part of time domain resources of the synchronization signal set, so that flexibility of sending the uplink signal by the terminal can be improved, and the feedback delay can be reduced. For example, the first time period covers only a part of subframes/slots/symbols of one half-frame, and one time period set covers the plurality of half-frames.

A relationship between the first time period and the first time period set may also be understood as follows. In this application, a time window of the SMTC is designed as a plurality of discontinuous time periods, and a time domain resource outside the plurality of time periods may be used to send the uplink signal. Therefore, a quantity of time domain resources for transmitting the uplink signal is increased, and the flexibility of sending the uplink signal by the terminal is improved. Further, the plurality of time periods may be in the plurality of half-frames.

Further, in an optional embodiment, the method shown in FIG. 4 further includes S4032: The terminal receives a second synchronization signal, where a time domain resource of the second synchronization signal does not overlap the time domain resource of the first uplink signal, and the time domain resource of the second synchronization signal does not belong to the first time period set.

In the SMTC configuration, the terminal receives a synchronization signal in the time window of the SMTC, and does not send the uplink signal, and the terminal cannot receive a synchronization signal outside the time window of the SMTC. However, in this application, the terminal can receive a synchronization signal outside the first time period set. In this manner, the first time period set may also be understood as SMTC enhancement. In an optional manner, the third indication information is carried in downlink control information (downlink control information, DCI) or a media access control control element (Media Access Control control element, MAC CE). In this manner, scheduling of the DCI or the MAC CE is more flexible, and the first time period set can be dynamically indicated.

In an optional manner, the first time period set belongs to a plurality of time period sets, and the plurality of time period sets may be predefined, or the plurality of time period sets are indicated by using fourth indication information. When the first time period set is indicated by using the fourth indication information, the method shown in FIG. 4 further includes S4033: The network device sends the fourth indication information, and correspondingly, the terminal receives the fourth indication information. The fourth indication information indicates the plurality of time period sets.

In an optional manner, similar to a manner of determining the first time period, the plurality of time period sets are determined by using at least one of the following parameters:
one or more periodicities, where the one or more periodicities are periodicities of the plurality of time period sets, and the plurality of time period sets include the first time period set;
one or more lengths, where the one or more lengths are a length of a time period in each of the plurality of time period sets; and
one or more offsets, where the one or more offsets indicate a start position of a time period in each of the plurality of time period sets in one periodicity to which the time period belongs. In other words, the one or more offsets are a difference between a start position of each of the plurality of first time period sets and a start position of a periodicity of the first time period set.

Table 1 shows an example of predefining or indicating the plurality of time period sets.

**Table 1**

| Time period set | Periodicity T | Length L | Offset O |
|---|---|---|---|
| 1 | T1 | L1 | O11, O12, and O13 |
| 2 | T2 | L2 | O21, O22, and O23 |
| 3 | T3 | L3 | O31, O32, and O33 |
| 4 | T4 | L4 | O41, O42, and O43 |

In Table 1, each time period set includes one corresponding length value and a plurality of offset values, or each time period set includes a plurality of first time periods of a same length. The plurality of first time periods of the same length correspond to different offsets.

Table 2 shows another example of predefining or indicating the plurality of time period sets.

| Time period set | Periodicity T | Length L | Offset O |
|---|---|---|---|
| 1 | T1 | L11, L12, and L13 | O11, O12, and O13 |
| 2 | T2 | L21, L22, and L23 | O21, O22, and O23 |
| 3 | T3 | L31, L32, and L33 | O31, O32, and O33 |
| 4 | T4 | L41, L42, and L43 | O41, O42, and O43 |

In Table 2, each time period set includes a plurality of length values and a plurality of offset values, and the plurality of offset values are in one-to-one correspondence with the plurality of length values. For example, in a time set 1, L11 corresponds to O11, L12 corresponds to O12, and L13 corresponds to O13. The terminal may determine a start position of L11 in one periodicity based on T1 and O11, determine a start position of L12 in one periodicity based on T1 and 012, and determine a start position of L13 in one periodicity based on T1 and 013.

In an optional manner, the network device may configure the plurality of time period sets in a semi-static manner. For example, the fourth indication information is carried in radio resource control (radio resource control, RRC) signaling. In this manner, a scheduling periodicity of the RRC signaling is long. The network device may configure a plurality of candidate time period sets of the terminal in a time period by using the RRC signaling, and dynamically indicate the first time period set by using the third indication information. For example, the RRC signaling indicates the four time period sets shown in Table 1. The network device may indicate, by using the DCI, a specific time period set from the four time period sets indicated by using the RRC signaling.

When the first time period set belongs to the plurality of time period sets, all the plurality of time period sets may be time period sets in which the terminal measures an SSB in a serving cell, or the plurality of time period sets may further include a time period set in which the terminal measures an SSB in the serving cell and another cell. The another cell may be an intra-frequency cell or a non-intra-frequency cell of the serving cell. In this manner, when the terminal moves to an edge of the serving cell, the terminal may learn of, based on a correspondence between the plurality of time period sets and a plurality of cells, a time period set for measuring an SSB in a non-serving cell. Table 3 shows an example of the plurality of time period sets including the time period set in which the terminal measures the SSB in the serving cell and the another cell.

**Table 3**

| Cell ID | Time period set |
|---|---|
| 1 | 1 and 3 |
| 2 | 2 and 4 |
| 3 | 5 |

In Table 2, a quantity of the plurality of time period sets is 5, a quantity of the plurality of cells is 3, and cell identifiers (identifiers, IDs) of the three cells are 1, 2, and 3 respectively. If the serving cell of the terminal is a cell whose ID is 1, and cells whose IDs are 2 and 3 are neighboring cells of the terminal, when the terminal is located at the edge of the serving cell and approaches the cell whose ID is 2, the terminal may measure an SSB based on the time period set 2 or the time period set 4.

In an optional manner, because the plurality of time period sets may be predefined, or may be indicated by using the fourth indication information, the correspondence between the plurality of time period sets and the plurality of cells may be predefined, or may be indicated by using signaling. For example, when the fourth indication information indicates the plurality of time period sets, a physical cell identifier (physical cell identifier, PCI) corresponding to each time period set may be carried in a configuration of each time period set. The terminal learns of, based on the fourth indication information, the plurality of time period sets and a cell corresponding to each time period set, to obtain time period sets for measuring an SSB in different cells.

It should be noted that, the first time period set in this application may be a time sequence configuration of a measured synchronization signal that is newly added based on the SMTC configuration. Alternatively, the first time period set may be understood as a newly added SMTC configuration. In other words, a communication system includes a plurality of SMTC configurations. The first time period set in this application is one of the plurality of SMTC configurations. Alternatively, the first time period set may be understood as an improvement in a current SMTC configuration, and may replace an SMTC configuration in a current communication system.

It may be understood that, to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

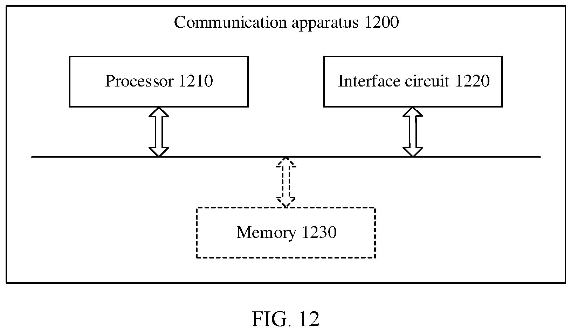

FIG. 11 and FIG. 12 each is a diagram of a possible structure of a communication apparatus according to an embodiment of this application. These communication apparatuses may be configured to implement the function of the terminal or the base station in the foregoing method embodiments, and therefore can also implement beneficial effects of foregoing method embodiments. In embodiments of this application, the communication apparatus may be one of the terminals 120a to 120j shown in FIG. 1, or may be the base station 110a or 110b shown in FIG. 1, or may be the module (for example, the chip) used in the terminal or the base station.

As shown in FIG. 11, the communication apparatus 1100 includes a processing unit 1110 and a transceiver unit 1120. The communication apparatus 1100 is configured to implement functions of the terminal or the network device in a method embodiment shown in FIG. 4.

When the communication apparatus 1100 is configured to implement the functions of the terminal in a method embodiment shown in FIG. 12, the transceiver unit 1120 is configured to receive first indication information and second indication information, where the first indication information indicates a first symbol set on which the terminal receives a synchronization signal set, and the second indication information indicates a second symbol set on which the terminal sends a first uplink signal. The processing unit 1110 is configured to determine whether the M symbols are in a first time period. The transceiver unit 1120 is further configured to receive the synchronization signal or send the first uplink signal, or the transceiver unit is further configured to receive a synchronization signal and send the first uplink signal depending on whether the M symbols are in the first time period.

In an optional manner, the transceiver unit 1120 is further configured to receive third indication information, where the third indication information indicates a first time period set.

In an optional manner, the transceiver unit 1120 is further configured to receive fourth indication information, where the fourth indication information indicates a plurality of time period sets.

In an optional manner, the transceiver unit 1120 is further configured to receive a second synchronization signal, where a time domain resource of the second synchronization signal does not belong to the first time period set.

For more detailed descriptions of the processing unit 1110 and the transceiver unit 1120, refer to the related descriptions in a method embodiment shown in FIG. 4. Details are not described herein again.

When the communication apparatus 1100 is configured to implement the functions of the network device in a method embodiment shown in FIG. 4, the transceiver unit 1120 is configured to send first indication information and second indication information, where the first indication information indicates a first symbol set on which the terminal receives a synchronization signal set, and the second indication information indicates a second symbol set on which the terminal sends a first uplink signal. The processing unit is configured to determine whether the M symbols are in a first time period. The transceiver unit 1120 is further configured to send a synchronization signal, or the transceiver unit is configured to send a synchronization signal and receive the first uplink signal depending on whether the M symbols are in the first time period.

In an optional manner, the transceiver unit 1120 is further configured to send third indication information, where the third indication information indicates the first time period set.

In an optional manner, the transceiver unit 1120 is further configured to send fourth indication information, where the fourth indication information indicates the plurality of time period sets.

For more detailed descriptions of the processing unit 1110 and the transceiver unit 1120, refer to the related descriptions in a method embodiment shown in FIG. 4. Details are not described herein again.

As shown in FIG. 12, the communication apparatus 1200 includes a processor 1210 and an interface circuit 1220. The processor 1210 and the interface circuit 1220 are coupled to each other. It can be understood that, the interface circuit 1220 may be a transceiver or an input/output interface. Optionally, the communication apparatus 1200 may further include a memory 1230, configured to store instructions to be executed by the processor 1210, store input data needed by the processor 1210 to run instructions, or store data generated after the processor 1210 runs instructions.

When the communication apparatus 1200 is configured to implement the method shown in FIG. 12, the processor 1210 is configured to implement functions of the processing unit 1310, and the interface circuit 1220 is configured to implement functions of the transceiver unit 1320.

When the communication apparatus is a chip used in the terminal, the terminal chip implements functions of the terminal in the foregoing method embodiments. The terminal chip receives information from another module (for example, a radio frequency module or an antenna) in the terminal, where the information is sent by the base station to the terminal; or the terminal chip sends information to another module (for example, a radio frequency module or an antenna) in the terminal, where the information is sent by the terminal to the base station.

When the communication apparatus is a module used in the base station, the module in the base station implements functions of the base station in the foregoing method embodiments. The module in the base station receives information from another module (for example, the radio frequency module or the antenna) in the base station, where the information is sent by the terminal to the base station; or the module in the base station sends information to another module (for example, the radio frequency module or the antenna) in the base station, where the information is sent by the base station to the terminal. The module in the base station herein may be a baseband chip in the base station, or may be a DU or another module. The DU herein may be a DU in an open radio access network (open radio access network, O-RAN) architecture.

It can be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by using software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium, and write information into the storage medium. The storage medium may alternatively be a component of the processor. The processor and the storage medium may be disposed in an ASIC. In addition, the ASIC may be located in the base station or the terminal. The processor and the storage medium may exist in the base station or the terminal as discrete components.

All or a part of foregoing embodiments may be implemented by using software, hardware, firmware, or any combination thereof. When software is configured to implement embodiments, all or a part of embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, such as a server or a data center, integrating one or more usable media. The usable medium may be a magnetic medium, such as a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form new embodiments.

In this application, at least one means one or more, and a plurality of means two or more. The term "and/or" describes an association relationship between associated objects and represents that three relationships may exist. For example, A and/or B may represent the following cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that, various numbers in embodiments of this application are merely used for differentiation for ease of description, and are not configured to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving first indication information, wherein the first indication information indicates a first symbol set on which a terminal device receives a synchronization signal set, the synchronization signal set comprises at least one synchronization signal, the at least one synchronization signal comprises a first synchronization signal, and a first symbol subset in the first symbol set is used to receive the first synchronization signal;
receiving second indication information, wherein the second indication information indicates a second symbol set on which the terminal device sends a first uplink signal, and the second symbol set and the first symbol subset have M overlapping symbols in time; and
receiving the first synchronization signal on the M symbols or sending the first uplink signal on the M symbols depending on whether the M symbols are in a first time period.

2. The method according to claim 1, comprising:
when the M symbols are in the first time period, receiving the first synchronization signal on the first symbol subset, and skipping sending the first uplink signal on the second symbol set, wherein the first symbol subset comprises the M symbols;
when the M symbols are in the first time period, receiving the first synchronization signal on the first symbol subset, and sending the first uplink signal on a symbol in a second symbol subset other than the M symbols, wherein the first symbol subset comprises the M symbols; or
when the M symbols are not in the first time period, sending the first uplink signal on the second symbol set, and skipping receiving the first synchronization signal on the first symbol subset, wherein the second symbol set comprises the M symbols.

3. The method according to claim 1 or 2, wherein the first time period belongs to a first time period set.

4. The method according to any one of claims 1 to 3, wherein the first time period set comprises synchronization signals in a part of beam directions.

5. The method according to any one of claims 1 to 4, wherein the first time period set is predefined; or
the method further comprises:
receiving third indication information, wherein the third indication information indicates the first time period set.

6. The method according to any one of claims 1 to 5, wherein the first time period set is determined by using a first bitmap, the first bitmap indicates N synchronization signals in the synchronization signal set, and the first time period set is a set of time domain symbols on which N synchronization signal sets are located.

7. The method according to any one of claims 1 to 6, wherein the first time period set belongs to a plurality of time period sets, and the plurality of time period sets are predefined, or the plurality of time period sets are indicated by using fourth indication information.

8. The method according to claim 7, wherein the first time period set is determined based on at least one of the following parameters:
one or more lengths, wherein the one or more lengths are a length of one or more time periods in the first time period set;
one periodicity, wherein the periodicity is a periodicity of the first time period set; and
one or more offsets, wherein the one or more offsets indicate a start position of the one or more time periods in the first time period set in one periodicity.

9. The method according to any one of claims 1 to 8, wherein the first uplink signal is carried on a physical uplink shared channel PUSCH, a physical uplink control channel PUCCH, or a physical random access channel PRACH, or the first uplink signal is a sounding reference signal SRS.

10. A communication method, wherein the method comprises:
sending first indication information, wherein the first indication information indicates a first symbol set on which a terminal device receives a synchronization signal set, the synchronization signal set comprises at least one synchronization signal, the at least one synchronization signal comprises a first synchronization signal, and a first symbol subset in the first symbol set is used to receive the first synchronization signal;
sending second indication information, wherein the second indication information indicates a second symbol set on which the terminal device sends a first uplink signal, and the second symbol set and the first symbol subset have M overlapping symbols in time; and
sending the synchronization signal and skipping receiving the first uplink signal on the M symbols, or sending the first synchronization signal and receiving the first uplink signal on the M symbols depending on whether the M symbols are in a first time period.

11. The method according to claim 10, comprising:
when the M symbols are in the first time period, sending the first synchronization signal on the first symbol subset, and skipping receiving the first uplink signal on the second symbol set, wherein the first symbol subset comprises the M symbols;
when the M symbols are in the first time period, sending the first synchronization signal on the first symbol subset, and receiving the first uplink signal on a symbol in a second symbol subset other than the M symbols, wherein the first symbol subset comprises the M symbols; or
when the M symbols are not in the first time period, sending the first synchronization signal on the first symbol subset, and receiving the first uplink signal on the second symbol set, wherein the second symbol set comprises the M symbols.

12. The method according to claim 10 or 11, wherein the first time period belongs to a first time period set.

13. The method according to any one of claims 10 to 12, wherein the first time period set comprises synchronization signals in a part of beam directions.

14. The method according to any one of claims 10 to 13, wherein the first time period set is predefined; or
the method further comprises:
sending third indication information, wherein the third indication information indicates the first time period set.

15. The method according to any one of claims 10 to 14, wherein the first time period set is determined by using a first bitmap, the first bitmap indicates N synchronization signals in the synchronization signal set, and the first time period set is a set of time domain symbols on which N synchronization signal sets are located.

16. The method according to any one of claims 10 to 15, wherein the first time period set belongs to a plurality of time period sets, and the plurality of time period sets are predefined, or the plurality of time period sets are indicated by using fourth indication information.

17. The method according to claim 16, wherein the first time period set is determined based on at least one of the following parameters:
one or more lengths, wherein the one or more lengths are a length of one or more time periods in the first time period set;
one periodicity, wherein the periodicity is a periodicity of the first time period set; and
one or more offsets, wherein the one or more offsets indicate a start position of the one or more time periods in the first time period set in one periodicity.

18. The method according to any one of claims 10 to 17, wherein the first uplink signal is carried on a physical uplink shared channel PUSCH, a physical uplink control channel PUCCH, or a physical random access channel PRACH, or the first uplink signal is a sounding reference signal SRS.

19. A communication apparatus, comprising:
a transceiver unit, configured to receive first indication information, wherein the first indication information indicates a first symbol set on which a terminal device receives a synchronization signal set, the synchronization signal set comprises at least one synchronization signal, the at least one synchronization signal comprises a first synchronization signal, and a first symbol subset in the first symbol set is used to receive the first synchronization signal, wherein
the transceiver unit is further configured to receive second indication information, wherein the second indication information indicates a second symbol set on which the terminal device sends a first uplink signal, and the second symbol set and the first symbol subset have M overlapping symbols in time; and
a processing unit, configured to configure the transceiver unit to receive the first synchronization signal on the M symbols or send the first uplink signal on the M symbols depending on whether the M symbols are in a first time period.

20. The apparatus according to claim 19, comprising:
when the M symbols are in the first time period, the transceiver unit receives the first synchronization signal on the first symbol subset, and skips sending the first uplink signal on the second symbol set, wherein the first symbol subset comprises the M symbols;
when the M symbols are in the first time period, the transceiver unit receives the first synchronization signal on the first symbol subset, and sends the first uplink signal on a symbol in a second symbol subset other than the M symbols, wherein the first symbol subset comprises the M symbols; or
when the M symbols are not in the first time period, the transceiver unit sends the first uplink signal on the second symbol set, and skips receiving the first synchronization signal on the first symbol subset, wherein the second symbol set comprises the M symbols.

21. The apparatus according to claim 19 or 20, wherein the first time period belongs to a first time period set.

22. The apparatus according to any one of claims 19 to 21, wherein the first time period set comprises synchronization signals in a part of beam directions.

23. The apparatus according to any one of claims 19 to 22, wherein the first time period set is predefined; or
the transceiver unit is further configured to:
receive third indication information, wherein the third indication information indicates the first time period set.

24. The apparatus according to any one of claims 19 to 23, wherein the first time period set is determined by using a first bitmap, the first bitmap indicates N synchronization signals in the synchronization signal set, and the first time period set is a set of time domain symbols on which N synchronization signal sets are located.

25. The apparatus according to any one of claims 19 to 24, wherein the first time period set belongs to a plurality of time period sets, and the plurality of time period sets are predefined, or the plurality of time period sets are indicated by using fourth indication information.

26. The apparatus according to claim 25, wherein the first time period set is determined based on at least one of the following parameters:
one or more lengths, wherein the one or more lengths are a length of one or more time periods in the first time period set;
one periodicity, wherein the periodicity is a periodicity of the first time period set; and
one or more offsets, wherein the one or more offsets indicate a start position of the one or more time periods in the first time period set in one periodicity.

27. The apparatus according to any one of claims 19 to 26, wherein the first uplink signal is carried on a physical uplink shared channel PUSCH, a physical uplink control channel PUCCH, or a physical random access channel PRACH, or the first uplink signal is a sounding reference signal SRS.

28. A communication apparatus, comprising:
a transceiver unit, configured to send first indication information, wherein the first indication information indicates a first symbol set on which a terminal device receives a synchronization signal set, the synchronization signal set comprises at least one synchronization signal, the at least one synchronization signal comprises a first synchronization signal, and a first symbol subset in the first symbol set is used to receive the first synchronization signal, wherein
the transceiver unit is further configured to send second indication information, wherein the second indication information indicates a second symbol set on which the terminal device sends a first uplink signal, and the second symbol set and the first symbol subset have M overlapping symbols in time; and
a processing unit, configured to configure the transceiver unit to send the synchronization signal on the M symbols and skip receiving the first uplink signal, or send the first synchronization signal on the M symbols and receive the first uplink signal depending on whether the M symbols are in a first time period.

29. The apparatus according to claim 28, comprising:
when the M symbols are in the first time period, the transceiver unit sends the first synchronization signal on the first symbol subset, and skips receiving the first uplink signal on the second symbol set, wherein the first symbol subset comprises the M symbols;
when the M symbols are in the first time period, the transceiver unit sends the first synchronization signal on the first symbol subset, and receives the first uplink signal on a symbol in a second symbol subset other than the M symbols, wherein the first symbol subset comprises the M symbols; or
when the M symbols are not in the first time period, the transceiver unit sends the first synchronization signal on the first symbol subset, and the transceiver unit receives the first uplink signal on the second symbol set, wherein the second symbol set comprises the M symbols.

30. The apparatus according to claim 28 or 29, wherein the first time period belongs to a first time period set.

31. The apparatus according to any one of claims 28 to 30, wherein the first time period comprises synchronization signals in a part of beam directions.

32. The apparatus according to any one of claims 28 to 31, wherein the first time period set is predefined; or
the transceiver unit is further configured to send third indication information, wherein the third indication information indicates the first time period set.

33. The apparatus according to any one of claims 28 to 32, wherein the first time period set is determined by using a first bitmap, the first bitmap indicates N synchronization signals in the synchronization signal set, and the first time period set is a set of time domain symbols on which N synchronization signal sets are located.

34. The apparatus according to any one of claims 28 to 33, wherein the first time period set belongs to a plurality of time period sets, and the plurality of time period sets are predefined, or the plurality of time period sets are indicated by using fourth indication information.

35. The apparatus according to claim 34, wherein the first time period set is determined based on at least one of the following parameters:
one or more lengths, wherein the one or more lengths are a length of one or more time periods in the first time period set;
one periodicity, wherein the periodicity is a periodicity of the first time period set; and
one or more offsets, wherein the one or more offsets indicate a start position of the one or more time periods in the first time period set in one periodicity.

36. The apparatus according to any one of claims 28 to 35, wherein the first uplink signal is carried on a physical uplink shared channel PUSCH, a physical uplink control channel PUCCH, or a physical random access channel PRACH, or the first uplink signal is a sounding reference signal SRS.

37. A computer-readable storage medium, wherein the storage medium stores instructions, and when the instructions are executed by a communication apparatus, the method according to any one of claims 1 to 9 is implemented, or the method according to any one of claims 10 to 18 is implemented.

38. A communication apparatus, comprising a processor, wherein the processor is coupled to a memory, the memory is configured to store instructions, and when the instructions are executed by the processor, the communication apparatus is enabled to perform the method according to any one of claims 1 to 9, or perform the method according to any one of claims 10 to 18.

39. A computer program product, wherein the computer program product, when run on a computer, enables the computer to perform the method according to any one of claims 1 to 10, or perform the method according to any one of claims 10 to 18.

40. A communication system, comprising at least one communication apparatus according to claim 19 and at least one communication apparatus according to claim 28.
